(19) Europäisches Patentamt
European Patent Office
Office européen des brevets

(11) **EP 2 858 199 B1**

(12) **EUROPEAN PATENT SPECIFICATION**

(45) Date of publication and mention
of the grant of the patent:
**01.01.2020 Bulletin 2020/01**

(21) Application number: **12878200.0**

(22) Date of filing: **31.05.2012**

(51) Int Cl.:
*H02J 3/16* *(2006.01)*   *H02J 3/50* *(2006.01)*
*H02J 3/38* *(2006.01)*

(86) International application number:
**PCT/JP2012/064231**

(87) International publication number:
**WO 2013/179470 (05.12.2013 Gazette 2013/49)**

(54) **VOLTAGE CONTROL DEVICE, CONTROL METHOD THEREOF AND VOLTAGE CONTROL PROGRAM**

SPANNUNGSSTEUERUNGSVORRICHTUNG, STEUERUNGSVERFAHREN DAFÜR UND SPANNUNGSSTEUERUNGSPROGRAMM

DISPOSITIF DE RÉGULATION DE TENSION, SON PROCÉDÉ DE RÉGULATION DE TENSION ET PROGRAMME DE RÉGULATION DE TENSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.04.2015 Bulletin 2015/15**

(73) Proprietor: **Mitsubishi Heavy Industries, Ltd. Tokyo 108-8215 (JP)**

(72) Inventors:
• **YASUGI, Akira**
  **Tokyo 108-8215 (JP)**
• **KII, Tsutomu**
  **Tokyo 108-8215 (JP)**

• **HORI, Yoshiaki**
  **Tokyo 108-8215 (JP)**

(74) Representative: **Cabinet Beau de Loménie**
  **158, rue de l'Université**
  **75340 Paris Cedex 07 (FR)**

(56) References cited:
**EP-A1- 1 508 951      EP-A1- 2 221 958**
**EP-A2- 2 267 306      WO-A1-2004/025803**
**WO-A2-2006/120033    WO-A2-2011/150932**
**JP-A- 2006 158 179    JP-A- 2007 124 779**
**JP-A- 2007 267 586    JP-A- 2007 300 784**
**US-A1- 2010 025 994**

**Description**

{Technical Field}

The present invention relates to a voltage control apparatus, a control method therefor, and a voltage control program therefor.

{Background Art}

In a wind turbine generator interconnected to a utility grid, it is difficult to systematically provide a stable power supply due to the influence of wind; therefore, reactive power has been conventionally adjusted to control the voltage at an interconnection point, in order to satisfy the interconnection regulations. For example, in an interconnected wind turbine generator, reactive power is adjusted by using a reactive-power compensation capability of the wind turbine generator and a reactive-power compensation device that is separately provided for the wind turbine generator by using a semiconductor device such as an IGBT (insulated gate bipolar transistor), thereby controlling the voltage at the interconnection point of the utility grid, to satisfy the interconnection regulations (see PTLs 1 to 5).

Furthermore, PTL 6 describes a technology for calculating the reactive power to be adjusted, on the basis of a resistance value of a power supply system serving as a communication line connected to the utility grid and an electrical constant of the communication line, such as the reactance.

{Citation List}

{Patent Literature}

{PTL 1} Japanese Unexamined Patent Application, Publication No. 2004-320859
{PTL 2} Japanese Unexamined Patent Application, Publication No. 2004-320860
{PTL 3} Publication of Japanese Patent No. 4773936
{PTL 4} United States Patent No. 7,245,037
{PTL 5} United States Patent No. 7,808,126
{PTL 6} Japanese Unexamined Patent Application, Publication No. 2000-78896
{PTL 7} WO 2011/150932

{Summary of Invention}

{Technical Problem}

However, the semiconductor device, such as an IGBT, used in the methods described in PTLs 1 to 5 is expensive, thus increasing the cost. Furthermore, since the utility grid requires, for example, the condition that "a permissible value should be obtained within a predetermined period of time (for example, five minutes)", there is a problem in that the fast response of the semiconductor device is not fully utilized.

The present invention has been made to solve the above-described problems, and an object thereof is to provide a voltage control apparatus, a control method therefor, and a voltage control program therefor capable of providing voltage control having responsiveness without causing any problem in the operation of the utility grid, by using inexpensive equipment that has been conventionally used.

{Solution to Problem}

In order to attain the above-described object, the present invention provides the following solutions.

According to a first aspect, the present invention provides a voltage control apparatus to be used in a generator system that includes a wind turbine generator having a switching device for controlling a generator; and a capacitor bank for improving power factor provided between the wind turbine generator and a utility grid, the voltage control apparatus including: a control-amount separating means for separating, when it is determined that an interconnection-point voltage at an interconnection point where the wind turbine generator is connected to the utility grid deviates from a target value, a target control amount for reactive power for matching the interconnection-point voltage with the target value into a first control amount and a second control amount, the first control amount serving as a control amount for reactive power that is caused by a fluctuation in active power at the interconnection point, the second control amount serving as a control amount for reactive power that is caused by a change in a power flow in the utility grid; a wind-turbine control means for controlling the switching device on the basis of the first control amount; and a capacitor-bank control means for controlling the capacitor bank on the basis of the second control amount.

According to this aspect, the voltage control apparatus to be used in the generator system that includes the wind turbine generator in which the generator is controlled by the switching device; and the capacitor bank for improving power factor provided between the wind turbine generator and the utility grid is provided. When it is determined that an interconnection-point voltage at an interconnection point where the wind turbine generator is connected to the utility grid deviates from a target value, a target control amount for reactive power for matching the interconnection-point voltage with the target value is separated into a first control amount serving as a control amount for reactive power that is caused by a fluctuation in active power at the interconnection point and a second control amount serving as a control amount for reactive power that is caused by a change in a power flow in the utility grid; the switching device controls the reactive power on the basis of the first control amount; and the capacitor bank provided for power factor improvement controls the reactive power on the basis of the second control amount.

Although control of the reactive power that is caused by a fluctuation in the active power requires responsiveness, since the switching device used to control the generator of the wind turbine generator is used therefor, the responsiveness requirements can be satisfied. Furthermore, control of the reactive power that is caused by a change in the power flow in the utility grid does not require responsiveness: for example, "a permissible value should be obtained within a predetermined period of time (for example, five minutes)". Therefore, by using the capacitor bank, which does not have better responsiveness but is less expensive than the switching device, it is possible to expect voltage control having responsiveness without causing any problem in the operation of the grid and to handle a large control amount.

Furthermore, when it is determined that the interconnection-point voltage deviates from the target value, in order to match the interconnection-point voltage with the target value, feedforward control is performed such that the switching device and the capacitor bank are controlled on the basis of the target control amount to adjust the reactive power. Therefore, it is possible to promptly make the interconnection-point voltage follow the target value.

Furthermore, the capacitor bank has been conventionally used for power factor improvement, and, in the present invention, the capacitor bank is also used for voltage control; therefore, it is possible to reduce time and cost required for additional construction etc.

The above-described voltage control apparatus may further include calculation means for determining the target control amount on the basis of the target value, the interconnection-point voltage, active power at the interconnection point output from the wind turbine generator, and a predetermined equation.

The target control amount can be easily calculated on the basis of the target value, the interconnection-point voltage, active power output from the wind turbine generator, and a predetermined equation.

According to a second aspect, the present invention provides a voltage control method for a voltage control apparatus to be used in a generator system that includes a wind turbine generator having a switching device for controlling a generator; and a capacitor bank for improving power factor provided between the wind turbine generator and a utility grid, the voltage control method including: separating, when it is determined that an interconnection-point voltage at an interconnection point where the wind turbine generator is connected to the utility grid deviates from a target value, a target control amount for reactive power for matching the interconnection-point voltage with the target value into a first control amount and a second control amount, the first control amount serving as a control amount for reactive power that is caused by a fluctuation in active power at the interconnection point, the second control amount serving as a control amount for reactive power that is caused by a change in a power flow in the utility grid; controlling the switching device on the basis of the first control amount; and controlling the capacitor bank on the basis of the second control amount.

According to a third aspect, the present invention provides a voltage control program for a voltage control apparatus to be used in a generator system that includes a wind turbine generator having a switching device for controlling a generator; and a capacitor bank for improving power factor provided between the wind turbine generator and a utility grid, the voltage control program causing a computer to execute: a first process of separating, when it is determined that an interconnection-point voltage at an interconnection point where the wind turbine generator is connected to the utility grid deviates from a target value, a target control amount for reactive power for matching the interconnection-point voltage with the target value into a first control amount and a second control amount, the first control amount serving as a control amount for reactive power that is caused by a fluctuation in active power at the interconnection point, the second control amount serving as a control amount for reactive power that is caused by a change in a power flow in the utility grid; a second process of controlling the switching device on the basis of the first control amount; and a third process of controlling the capacitor bank on the basis of the second control amount.

{Advantageous Effects of Invention}

According to the present invention, an advantage is afforded in that it is possible to provide voltage control having responsiveness without causing any problem in the operation of a utility grid, by using inexpensive equipment that has been conventionally used.

{Brief Description of Drawings}

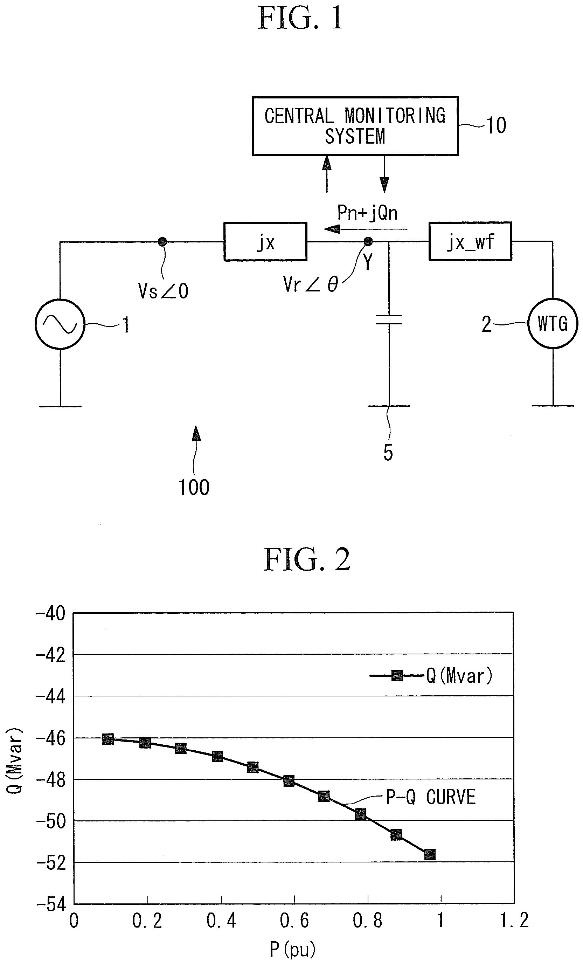

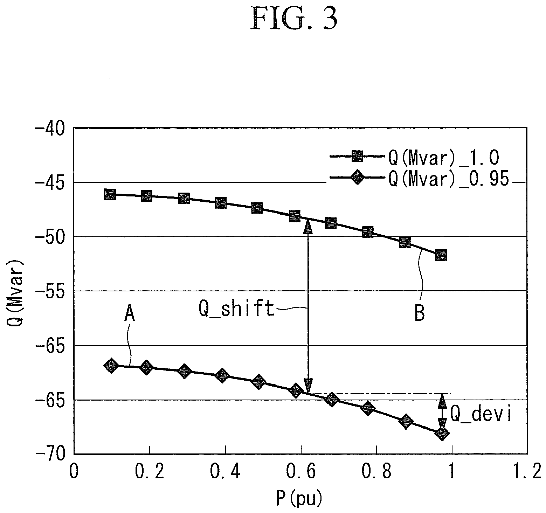

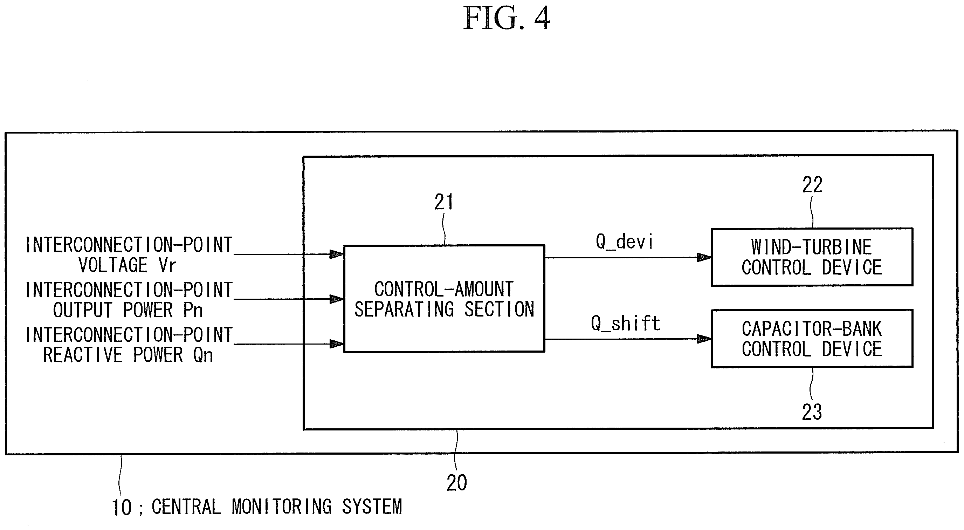

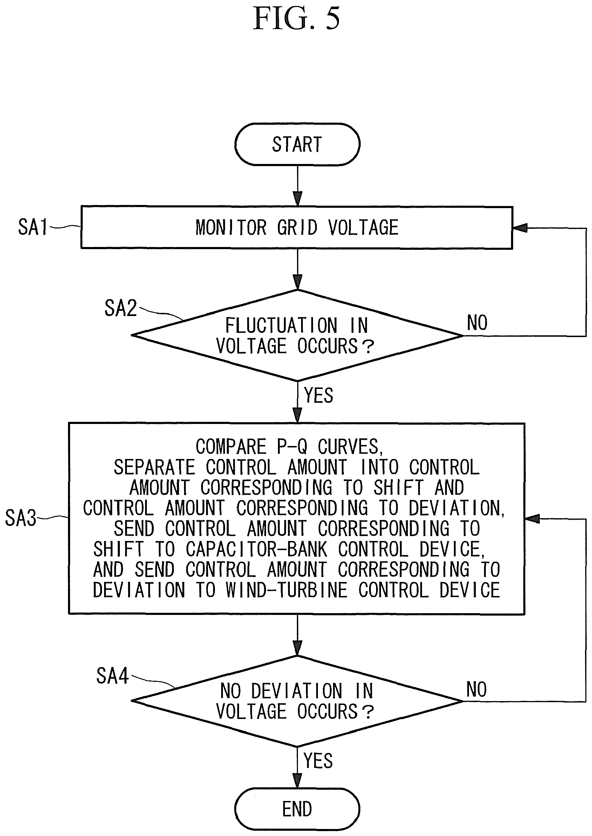

{Fig. 1} Fig. 1 is a diagram showing, in outline, the configuration of a wind turbine generator system according to an embodiment of the present invention.
{Fig. 2} Fig. 2 is a graph showing an example relationship between active power and reactive power when an interconnection-point voltage is 1.0 pu.
{Fig. 3} Fig. 3 is a graph showing an example target control amount for matching the interconnection-point voltage with a target value of 1.0 pu when the interconnection-point voltage is 0.95 pu.
{Fig. 4} Fig. 4 is a functional block diagram of a voltage control apparatus according to the embodiment of the present invention.
{Fig. 5} Fig. 5 is an operation flow of the voltage control apparatus according to the embodiment of the present invention.

{Description of Embodiments}

A voltage control apparatus, a control method therefor, and a voltage control program therefor according to an embodiment of the present invention will be described below with reference to the drawings.
Fig. 1 is a diagram showing the entire configuration of a wind turbine generator system (generator system) 100 according to the embodiment of the present invention. The wind turbine generator system 100 includes a single wind turbine generator (hereinafter, referred to as "wind turbine") 2 having a switching device that controls a generator; a capacitor bank 5 for power factor improvement, connected between the wind turbine 2 and a utility grid 1; and a central monitoring system 10 that controls the operating state of the wind turbine 2. The wind turbine generator system 100 is connected to the utility grid 1 at an interconnection point Y.
In the wind turbine generator system 100, an interconnection-point voltage Vr at the interconnection point Y is measured by a voltage measuring section (not shown), and the voltage value of the interconnection-point voltage Vr is output to the central monitoring system 10. Furthermore, in the wind turbine generator system 100, power (Pn + jQn) (Pn: active power, Qn: reactive power) at the interconnection point Y is measured by a power measuring section (not shown), and the measured power value is output to the central monitoring system 10. Note that, in this embodiment, a description is given of an example case where the wind turbine generator system 100 includes just one wind turbine 2; however, the wind turbine generator system 100 may include a wind farm having a plurality of wind turbines 2. The number of wind turbines is not particularly limited.
As shown in Fig. 1, in the wind turbine generator system 100, the grid impedance, which is the impedance on the utility grid 1 side with respect to the interconnection point Y, is jx, and the impedance on the wind turbine 2 sides with respect to the interconnection point Y is jx_wf. Furthermore, in Fig. 1, "j" shown in the grid impedance and the impedance on the wind turbine 2 side is an imaginary number, so that the grid impedance and the impedance on the wind turbine 2 side are also referred to as x and x_wf, respectively, in the following equations etc. Note that the resistance R of the grid impedance is represented by Vs.
When the active power at the interconnection point Y is Pn, the reactive power thereat is Qn, the interconnection-point voltage, which is voltage at the interconnection point Y, is Vr, and the difference in phase of the interconnection-point voltage Vr relative to that of the bus voltage Vs is $\theta$, a power equation shown in Equation (1) is obtained by the wind turbine generator system 100 shown in Fig. 1. It is assumed that the resistance, capacitance, and effective reactance of cables of the wind turbine 2 and the utility grid 1 are ignored.
{Equation 1}

$$Pn^2 + \left(Qn + \frac{Vr^2}{x}\right)^2 = \left(\frac{VsVr}{x}\right)^2 \quad \cdot \cdot \cdot \cdot \ (1)$$

When Equation (1) is solved in terms of Qn, Equation (2) is obtained.
{Equation 2}

$$Qn = \sqrt{\left(\frac{(VsVr)^2}{x^2} - Pn^2\right)} - \frac{Vr^2}{x} \quad \cdots \quad (2)$$

It is assumed that the active power Pn is a value that depends on the output power of the wind turbine 2 and is an uncontrolled variable, and x (= the grid impedance) and Vs (= the bus voltage) are grid constants. By solving Equation (2), the reactive power Qn used to obtain a desired interconnection-point voltage Vr can be calculated as a variable of the active power Pn.

Furthermore, components of the reactive power Qn can be separated into controllable reactive power and uncontrollable reactive power. Specifically, the reactive power Qn is composed of reactive power Q_reg that can be controlled by the wind turbine 2 and the capacitor bank 5 and uncontrollable reactive power Q_wf that is determined on the basis of the impedance jx_wf on the wind turbine 2 side, so that Equation (2) can be rewritten as in Equation (3).
{Equation 3}

$$Q\_reg = \sqrt{\left(\frac{(VsVr)^2}{x^2} - Pn^2\right)} - \frac{Vr^2}{x} - Q\_wf \quad \cdots \quad (3)$$

In this embodiment, a description is given of a voltage control apparatus 20 in which a target control amount for the reactive power Qn, which is composed of the reactive power Q_reg that can be controlled by the wind turbine 2 and the capacitor bank 5 and the uncontrollable reactive power Q_wf that is determined on the basis of the wind turbine 2, is determined on the basis of Equation (3), and the interconnection-point voltage Vr is controlled so as to have a desired value through feedforward control. Specifically, the wind turbine generator system 100 includes the voltage control apparatus 20 in the central monitoring system 10.

Fig. 4 is a functional block diagram of the voltage control apparatus 20 included in the central monitoring system 10. As shown in Fig. 4, the voltage control apparatus 20 includes a control-amount separating section (control-amount separating means) 21, a wind-turbine control device (wind-turbine control means) 22, and a capacitor-bank control device (capacitor-bank control means) 23.

The control-amount separating section 21 compares the interconnection-point voltage Vr obtained from the voltage measuring section with an interconnection-point voltage Vr' serving as a target value, to determine whether the interconnection-point voltage Vr deviates from the target value Vr'. If it is determined that the interconnection-point voltage Vr deviates from the target value Vr', the control-amount separating section 21 separates the target control amount for the reactive power Qn, for matching the interconnection-point voltage Vr with the target value Vr', into a first control amount Q_devi serving as a control amount for the reactive power Qn that is caused by a fluctuation in the active power Pn at the interconnection point Y and a second control amount Q_shift serving as a control amount for the reactive power Qn that is caused by a change in power flow in the utility grid 1.

A description will be given below of a method used by the control-amount separating section 21 to calculate the first control amount Q_devi and the second control amount Q_shift.

The control-amount separating section 21 substitutes typical numerical values (for example, grid impedance x of 0.06, wind-turbine-side impedance x_wf of 0.23, bus voltage Vs of 1.0) that are disclosed in books etc. in the related art. and a desired interconnection-point voltage Vr of 1.0, which serves as a target value, into Equation (3), to derive the thus-obtained relationship between the active power Pn and the reactive power Qn. It is assumed that the reference capacity is 200 MVA. Furthermore, the reactive power Q_wf in Equation (3) is a value determined on the basis of the impedance x_wf on the wind turbine 2 sides.

On the basis of the above-described calculation, the relationship between the active power Pn (variable value) at the interconnection point Y and the reactive power Qn corresponding thereto is obtained as shown in Fig. 2. Hereinafter, the graph indicating the relationship between the active power Pn at the interconnection point Y and the reactive power Qn is referred to as a "P-Q curve".

As shown in the P-Q curve of Fig. 2, in the relationship between the active power Pn and the reactive power Qn, if the active power Pn is changed, the reactive power Qn is also changed. In a case of a target interconnection-point voltage Vr of 1.0, the optimum P-Q curve is obtained.

Furthermore, if the control-amount separating section 21 determines that the interconnection-point voltage Vr deviates from the target value Vr' of 1.0, the control-amount separating section 21 derives a P-Q curve on the basis of the relationship between the measured interconnection-point output power (active power) Pn and the measured interconnection-point reactive power Qn to calculate the difference from the optimum P-Q curve.

For example, when the interconnection-point voltage Vr deviates from the target value Vr' of 1.0 to be 0.95, the control-amount separating section 21 generates a P-Q curve such as that indicated by a curve A (with diamond symbols) shown in Fig. 3, on the basis of the obtained measurement values of the interconnection-point output power (active power) Pn and the interconnection-point reactive power Qn. Here, a curve B (with square symbols) shown in Fig. 3 corresponds to the optimum P-Q curve shown in Fig. 2, generated in the case of the target value Vr' of 1.0. In this way, the P-Q curve differs depending on the value of the interconnection-point voltage Vr.

As a target control amount, the control-amount separating section 21 uses a control amount for the reactive power for matching the P-Q curve generated in the case of the interconnection-point voltage Vr of 0.95 (the curve A in Fig. 3) with the P-Q curve generated in the case of the target value Vr' of 1.0 for the interconnection-point voltage (the curve B in Fig. 3).

More specifically, the control-amount separating section 21 separates the target control amount into a first control amount (Q_devi) serving as a control amount for the reactive power Qn that is caused by a fluctuation in the active power Pn at the interconnection point Y and a second control amount (Q_shift) serving as a control amount for the reactive power Qn that is caused by a change in the power flow in the utility grid 1 and controls the first control amount and the second control amount, thereby achieving the target control amount.

Since the first control amount Q_devi in response to a fluctuation in the active power Pn at the interconnection point Y, requires responsiveness, a reactive-power control function of the wind turbine 2 is used. Specifically, the first control amount Q_devi is made to correspond to the reactive power Q_wf in Equation (3), calculated on the basis of the impedance jx_wf on the wind turbine 2 sides. In other words, the control-amount separating section 21 outputs the reactive power Q_wf calculated from the impedance jx_wf on the wind turbine 2 side to the wind-turbine control device 22 as the first control amount Q_devi.

Furthermore, since the second control amount Q_shift in response to a change in the power flow in the utility grid 1, does not require responsiveness, the second control amount Q_shift is made to correspond to the reactive power Q_reg, which can be controlled by the wind turbine 2 and the capacitor bank 5, whose responsiveness is slower than a switching device such as an IGBT. In other words, the control-amount separating section 21 substitutes, into Equation (3), the calculated first control amount Q_devi, typical numerical values (the grid impedance x and the bus voltage Vs), measured active power Pn, and the interconnection-point voltage Vr of 1.0 serving as the target value, to calculate the second control amount Q_shift and output it to the capacitor-bank control device 23.

The wind-turbine control device 22 controls the switching device, which controls the generator of the wind turbine 2, on the basis of the first control amount Q_devi.

The capacitor-bank control device 23 controls the capacitor bank 5 on the basis of the second control amount Q_shift.

Next, the operational effect of the wind turbine generator system 100 of this embodiment will be described with reference to Figs. 1 to 5.

The interconnection-point voltage Vr is detected (Step SA1 of Fig. 5), and it is determined whether the interconnection-point voltage Vr deviates from the target value Vr' (whether a fluctuation in voltage occurs) (Step SA2 of Fig. 5). If it is determined that the interconnection-point voltage Vr does not deviate from the target value Vr', the flow returns to Step SA1, and detection of the interconnection-point voltage Vr is performed to continue monitoring (No in Step SA2 of Fig. 5). If it is determined that the interconnection-point voltage Vr deviates from the target value Vr', a P-Q curve determined on the basis of a desired interconnection-point voltage Vr' serving as the target value and a P-Q curve determined on the basis of the detected interconnection-point voltage Vr are compared. As a result of the comparison, a target control amount for the reactive power, which is used for matching the interconnection-point voltage Vr with the desired interconnection-point voltage Vr' serving as the target value, is separated into the first control amount and the second control amount, the first control amount is sent to the wind-turbine control device 22, and the second control amount is sent to the capacitor-bank control device 23 (Step SA3 of Fig. 5).

The interconnection-point voltage Vr is compared with the desired interconnection-point voltage Vr' serving as the target value to determine whether the interconnection-point voltage Vr deviates from the desired interconnection-point voltage Vr' (Step SA4 of Fig. 5). If the interconnection-point voltage Vr does not deviate from the desired interconnection-point voltage Vr', this processing ends (No in Step SA4 of Fig. 5). If the interconnection-point voltage Vr deviates from the desired interconnection-point voltage Vr', Step SA3 is repeated (Yes in Step SA4 of Fig. 5).

The voltage control apparatus 20 of the above-described embodiment may have a configuration in which all or part of the above-described processing is performed by separate software. In that case, the voltage control apparatus 20 includes a CPU, a main storage unit, such as a RAM, and a computer-readable recording medium having a program for realizing all or part of the above-described processing recorded therein. The CPU reads the program recorded in the recording medium and performs information processing and calculation processing, thereby realizing the same processing as that performed by the voltage control apparatus 20.

Examples of the computer-readable recording medium include a magnetic disc, a magneto optical disc, a CD-ROM, a DVD-ROM, and a semiconductor memory. Furthermore, this computer program may be distributed to a computer through a communication line, and the computer may execute the program.

As described above, according to the voltage control apparatus 20, the control method therefor, and the voltage control program therefor of this embodiment, if it is determined that the interconnection-point voltage Vr at the interconnection point Y, where the wind turbine 2 is connected to the utility grid 1, deviates from the target value, the target control amount for the reactive power for matching the interconnection-point voltage Vr with the target value is separated into the first control amount serving as a control amount for the reactive power that is caused by a fluctuation in the active power at the interconnection point Y and the second control amount serving as a control amount for the reactive power that is caused by a change in the power flow in the utility grid 1; the switching device controls the reactive power on the basis of the first control amount; and the capacitor bank provided for power factor improvement controls the reactive power on the basis of the second control amount.

Although control of the reactive power that is caused by a fluctuation in the active power requires responsiveness, since the switching device used to control the generator of the wind turbine 2 is used for this purpose, the responsiveness requirements can be satisfied. Furthermore, control of the reactive power that is caused by a change in the power flow in the utility grid 1 does not require responsiveness: for example, "a permissible value should be obtained within a predetermined period of time (for example, five minutes)". Therefore, by using the capacitor bank 5, which does not have better responsiveness but is less expensive than the switching device, it is possible to expect voltage control having responsiveness without causing any problem in the operation of the grid. Furthermore, since a large capacity of reactive power can be supplied by using the capacitor bank 5, a large fluctuation, as indicated by Q_shift in Fig. 3, can be handled.

Furthermore, when it is determined that the interconnection-point voltage Vr deviates from the target value, in order to match the interconnection-point voltage Vr with the target value, feedforward control is performed such that the switching device and the capacitor bank 5 are controlled on the basis of the target control amount to adjust the reactive power. Therefore, it is possible to promptly make the interconnection-point voltage Vr follow the target value.

Furthermore, the capacitor bank 5 has been conventionally used for power factor improvement, and, in the present invention, the capacitor bank 5 is also used for voltage control; therefore, it is possible to reduce time and cost required for additional construction etc.

Modification

Note that, in this embodiment, as grid constants, such as the grid impedance jx, the impedance jx_wf on the wind turbine 2 sides, and the bus voltage Vs, typical numerical values that have been conventionally disclosed are substituted into Equation (2) and Equation (3); however, the values of grid constants are not limited thereto. For example, in Equation (2), simultaneous equations in which the grid impedance jx and the bus voltage Vs are variables may be generated on the basis of measured interconnection-point voltage Vr, and two or more combinations of measured active power Pn and reactive power Qn, a high-precision grid impedance jx and a high-precision bus voltage Vs may be obtained by solving the simultaneous equations, and these values of grid constants may be used.

In this way, when a high-precision grid impedance jx and a high-precision bus voltage Vs are obtained, the P-Q curves shown in Fig. 2 and Fig. 3 become higher-precision curves. Thus, a higher-precision second control amount Q_reg can be calculated.

{Reference Signs List}

|  |  |
|---|---|
| 2 | wind turbine |
| 5 | capacitor bank |
| 10 | central monitoring system |
| 20 | voltage control apparatus |
| 21 | control-amount separating section |
| 22 | wind-turbine control device |
| 23 | capacitor-bank control device |
| 100 | wind turbine generator system |

**Claims**

1. A voltage control apparatus (20) to be used in a generator system (100) that includes a wind turbine generator (2) having a switching device for controlling a generator; and a capacitor bank (5) for improving power factor provided between the wind turbine generator (2) and a utility grid (1), the voltage control apparatus **characterized by** comprising:
a control-amount separating means (21) for separating, when it is determined that an interconnection-point voltage (Vr) at an interconnection point (Y) where the wind turbine generator (2) is connected to the utility grid (1) deviates from a target value (Vr'), a target control amount for reactive power (Qn) for matching the interconnection-point voltage (Vr) with the target value (Vr') into a first control amount (Q_devi) and a second control amount (Q_shift), the first control amount serving as a control amount for reactive power that is caused by a fluctuation in active power at the interconnection point (Y), the second control amount serving as a control amount for reactive power that is caused by a change in a power flow in the utility grid (1), the control-amount separating means (21) being configured to:

   derive a first relationship between the active power (Pn) and the reactive power (Qn) on the basis of the interconnection-point voltage which serves as the target value (Vr'), a bus voltage (Vs), and a power grid impedance (x), said first relationship defining a first curve obtained from:

$$\mathrm{Qn} = \sqrt{\left(\frac{(VsVr')^2}{x^2} - Pn^2\right)} - \frac{Vr'^2}{x};$$

   derive a second relationship between the active power (Pn) and the reactive power (Qn) on the basis of the interconnection-point voltage (Vr) at the interconnection point (Y), the bus voltage (Vs), and the power grid impedance (x), said second relationship differing from the first relationship and defining a second curve obtained from:

$$\mathrm{Qn} = \sqrt{\left(\frac{(VsVr)^2}{x^2} - Pn^2\right)} - \frac{Vr^2}{x};$$

   and to determine the first control amount (Q_devi) and the second control amount (Q_shift) on the basis of the difference between the first and second relationships, that is, the first control amount (Q_devi) and the second control amount (Q_shift)for matching the second curve with the first curve; the voltage control apparatus further comprising:

      a wind-turbine control means (22) for controlling the switching device on the basis of the first control amount; and
      a capacitor-bank control means (23) for controlling the capacitor bank (5) on the basis of the second control amount.

2. A voltage control apparatus (20) according to claim 1, wherein the control-amount separating means is configured to determine the target control amount on the basis of the target value, the interconnection-point voltage, active power at the interconnection point (Y) output from the wind turbine generator (2), and a predetermined equation.

3. A voltage control method for a voltage control apparatus (20) to be used in a generator system (100) that includes a wind turbine generator (2) having a switching device for controlling a generator; and a capacitor bank (5) for improving power factor provided between the wind turbine generator (2) and a utility grid (1), the voltage control method **characterized by** comprising:
a separating step that separates, when it is determined that an interconnection-point voltage (Vr) at an interconnection point (Y) where the wind turbine generator (2) is connected to the utility grid (1) deviates from a target value (Vr'), a target control amount for reactive power (Qn) for matching the interconnection-point voltage with the target value into a first control amount (Q_devi) and a second control amount (Q_shift), the first control amount serving as a control amount for reactive power that is caused by a fluctuation in active power at the interconnection point (Y), the second control amount serving as a control amount for reactive power that is caused by a change in a power flow in the utility grid (1), said separating step comprising:

      deriving a first relationship between the active power (Pn) and the reactive power (Qn) on the basis of the interconnection-point voltage which serves as the target value (Vr'), a bus voltage (Vs), and a power grid impedance (x), said first relationship defining a first curve obtained from:

$$Qn = \sqrt{\left(\frac{(VsVr')^2}{x^2} - Pn^2\right)} - \frac{Vr'^2}{x};$$

deriving a second relationship between the active power and the reactive power on the basis of the interconnection-point voltage (Vr) at the interconnection point (Y), the bus voltage (Vs), and the power grid impedance (x), said second relationship differing from the first relationship when the interconnection-point voltage (Vr) at the interconnection point (Y) deviates from the target value (Vr'); said second relationship defining a second curve obtained from:

$$Qn = \sqrt{\left(\frac{(VsVr)^2}{x^2} - Pn^2\right)} - \frac{Vr^2}{x} \; ;$$

and determining the first control amount (Q_devi) and the second control amount (Q_shift) on the basis of the difference between the first and second relationships, that is, the first control amount (Q_devi) and the second control amount (Q_shift)for matching the second curve with the first curve; said method further comprising:

controlling the switching device on the basis of the first control amount; and
controlling the capacitor bank (5) on the basis of the second control amount.

**Patentansprüche**

1. Spannungssteuereinrichtung (20), die in einem Generatorsystem (100) zu verwenden ist, das einen Windturbinengenerator (2) mit einer Schaltvorrichtung zum Steuern eines Generators; und eine Kondensatorbank (5) zum Verbessern eines Leistungsfaktors, der zwischen dem Windturbinengenerator (2) und einem Versorgungsnetz (1) bereitgestellt ist, beinhaltet, wobei die Spannungssteuereinrichtung **dadurch gekennzeichnet ist, dass** sie Folgendes umfasst:
ein Steuermengentrennmittel (21) zum Trennen einer Zielsteuermenge für Blindleistung (Qn) zum Angleichen einer Kopplungspunktspannung (Vr) an einen Zielwert (Vr') in eine erste Steuermenge (Q_devi) und eine zweite Steuermenge (Q_shift), wenn bestimmt wird, dass die Kopplungspunktspannung (Vr) an einem Kopplungspunkt (Y), an dem der Windturbinengenerator (2) mit dem Versorgungsnetz (1) verbunden ist, vom Zielwert (Vr') abweicht, wobei die erste Steuermenge als eine Steuermenge für Blindleistung dient, die durch eine Schwankung der Wirkleistung am Kopplungspunkt (Y) verursacht wird, wobei die zweite Steuermenge als eine Steuermenge für Blindleistung dient, die durch eine Änderung eines Leistungsflusses im Versorgungsnetz (1) verursacht wird, wobei das Steuermengentrennmittel (21) zu Folgendem ausgelegt ist:

Ableiten einer ersten Beziehung zwischen der Wirkleistung (Pn) und der Blindleistung (Qn) auf Basis der Kopplungspunktspannung, die als der Zielwert (Vr') dient, einer Busspannung (Vs) und einer Leistungsnetzimpedanz (x), wobei die erste Beziehung eine erste Kurve definiert, die erhalten wird aus:

$$Qn = \sqrt{\left(\frac{(VsVr')^2}{x^2} - Pn^2\right)} - \frac{Vr'^2}{x};$$

Ableiten einer zweiten Beziehung zwischen der Wirkleistung (Pn) und der Blindleistung (Qn) auf Basis der Kopplungspunktspannung (Vr) am Kopplungspunkt (Y), der Busspannung (Vs) und der Leistungsnetzimpedanz (x), wobei sich die zweite Beziehung von der ersten Beziehung unterscheidet und eine zweite Kurve definiert, die erhalten wird aus:

$$Qn = \sqrt{\left(\frac{(VsVr)^2}{x^2} - Pn^2\right)} - \frac{Vr^2}{x};$$

und zu Folgendem Bestimmen der ersten Steuermenge (Q_devi) und der zweiten Steuermenge (Q_shift) auf Basis der Differenz zwischen der ersten und der zweiten Beziehung, das heißt der ersten Steuermenge (Q_devi) und der zweiten Steuermenge (Q_shift) zum Angleichen der zweiten Kurve an die erste Kurve; wobei die Spannungssteuereinrichtung ferner Folgendes umfasst:

ein Windturbinensteuermittel (22) zum Steuern der Schaltvorrichtung auf Basis der ersten Steuermenge; und
ein Kondensatorbanksteuermittel (23) zum Steuern der Kondensatorbank (5) auf Basis der zweiten Steuermenge.

2. Spannungssteuereinrichtung (20) nach Anspruch 1, wobei das Steuermengentrennmittel dazu ausgelegt ist, die Zielsteuermenge auf Basis des Zielwerts, der Kopplungspunktspannung, der Wirkleistung am Kopplungspunkt (Y), die vom Windturbinengenerator (2) ausgegeben wird, und einer vorbestimmten Gleichung zu bestimmen.

3. Spannungssteuerverfahren für eine Spannungssteuereinrichtung (20), die in einem Generatorsystem (100) zu verwenden ist, das einen Windturbinengenerator (2) mit einer Schaltvorrichtung zum Steuern eines Generators; und eine Kondensatorbank (5) zum Verbessern eines Leistungsfaktors, der zwischen dem Windturbinengenerator (2) und einem Versorgungsnetz (1) bereitgestellt ist, beinhaltet, wobei das Spannungssteuerverfahren **dadurch gekennzeichnet ist, dass** es Folgendes umfasst:

einen Trennschritt, der eine Zielsteuermenge für Blindleistung (Qn) zum Angleichen einer Kopplungspunktspannung an einen Zielwert in eine erste Steuermenge (Q_devi) und eine zweite Steuermenge (Q_shift) trennt, wenn bestimmt wird, dass die Kopplungspunktspannung (Vr) an einem Kopplungspunkt (Y), an dem der Windturbinengenerator (2) mit dem Versorgungsnetz (1) verbunden ist, vom Zielwert (Vr') abweicht, wobei die erste Steuermenge als eine Steuermenge für Blindleistung dient, die durch eine Schwankung der Wirkleistung am Kopplungspunkt (Y) verursacht wird, wobei die zweite Steuermenge als eine Steuermenge für Blindleistung dient, die durch eine Änderung eines Leistungsflusses im Versorgungsnetz (1) verursacht wird, wobei der Trennschritt Folgendes umfasst:

Ableiten einer ersten Beziehung zwischen der Wirkleistung (Pn) und der Blindleistung (Qn) auf Basis der Kopplungspunktspannung, die als der Zielwert (Vr') dient, einer Busspannung (Vs) und einer Leistungsnetzimpedanz (x), wobei die erste Beziehung eine erste Kurve definiert, die erhalten wird aus:

$$Qn = \sqrt{\left(\frac{(VsVr')^2}{x^2} - Pn^2\right) - \frac{Vr'^2}{x}};$$

Ableiten einer zweiten Beziehung zwischen der Wirkleistung und der Blindleistung auf Basis der Kopplungspunktspannung (Vr) am Kopplungspunkt (Y), der Busspannung (Vs) und der Leistungsnetzimpedanz (x), wobei sich die zweite Beziehung von der ersten Beziehung unterscheidet, wenn die Kopplungspunktspannung (Vr) am Kopplungspunkt (Y) vom Zielwert (Vr') abweicht; wobei die zweite Beziehung eine zweite Kurve definiert, die erhalten wird aus:

$$Qn = \sqrt{\left(\frac{(VsVr)^2}{x^2} - Pn^2\right) - \frac{Vr^2}{x}};$$

und Bestimmen der ersten Steuermenge (Q_devi) und der zweiten Steuermenge (Q_shift) auf Basis der Differenz zwischen der ersten und der zweiten Beziehung, das heißt der ersten Steuermenge (Q_devi) und der zweiten Steuermenge (Q_shift) zum Angleichen der zweiten Kurve an die erste Kurve; wobei das Verfahren ferner Folgendes umfasst:

Steuern der Schaltvorrichtung auf Basis der ersten Steuermenge; und
Steuern der Kondensatorbank (5) auf Basis der zweiten Steuermenge.

**Revendications**

1. Appareil de commande de tension (20) pour être utilisé dans un système de génératrice (100) qui comprend une aérogénératrice (2) comportant un dispositif de commutation pour commander une génératrice ; et un bloc de condensateurs (5) pour améliorer le facteur de puissance obtenu entre l'aérogénératrice (2) et un réseau électrique (1), l'appareil de commande de tension étant **caractérisé en ce qu'**il comprend :

des moyens de séparation de quantité de commande (21) pour séparer une quantité de commande cible pour la puissance réactive (Qn) pour faire en sorte que la tension de point d'interconnexion (Vr) corresponde à la valeur cible (Vr') en une première quantité de commande (Q_devi) et une deuxième quantité de commande (Q_shift), lorsqu'il est déterminé qu'une tension de point d'interconnexion (Vr) au niveau d'un point d'interconnexion (Y) où l'aérogénératrice (2) est connectée au réseau électrique (1) s'écarte d'une valeur cible (Vr'), la première quantité de commande servant en tant que quantité de commande pour la puissance réactive qui est provoquée par une fluctuation de la puissance active au niveau du point d'interconnexion (Y), la deuxième quantité de commande servant en tant que quantité de commande pour la puissance réactive qui est provoquée par un changement d'une distribution de puissance dans le réseau électrique (1), les moyens de séparation de quantité de commande (21) étant configurés pour :

déduire une première relation entre la puissance active (Pn) et la puissance réactive (Qn) sur la base de la tension de point d'interconnexion qui sert en tant que valeur cible (Vr'), d'une tension de bus (Vs), et d'une impédance de réseau d'alimentation (x),
ladite première relation définissant une première courbe obtenue à partir de :

$$Qn = \sqrt{\left(\frac{(VsVr')^2}{x^2} - Pn^2\right)} - \frac{Vr'^2}{x} \ ;$$

déduire une deuxième relation entre la puissance active (Pn) et la puissance réactive (Qn) sur la base de la tension de point d'interconnexion (Vr) au niveau du point d'interconnexion (Y), de la tension de bus (Vs), et de l'impédance de réseau d'alimentation (x), ladite deuxième relation étant différente de la première relation et définissant une deuxième courbe obtenue à partir de :

$$Qn = \sqrt{\left(\frac{(VsVr)^2}{x^2} - Pn^2\right)} - \frac{Vr^2}{x} \ ;$$

et pour déterminer la première quantité de commande (Q_devi) et la deuxième quantité de commande (Q_shift) sur la base de la différence entre les première et deuxième relations, c'est à dire la première quantité de commande (Q_devi) et la deuxième quantité de commande (Q_shift) pour faire en sorte que la deuxième courbe corresponde à la première courbe ; l'appareil de commande de tension comprenant en outre :

des moyens de commande d'éolienne (22) pour commander le dispositif de commutation sur la base de la première quantité de commande ; et
des moyens de commande de bloc de condensateurs (23) pour commander le bloc de condensateurs (5) sur la base de la deuxième quantité de commande.

2. Appareil de commande de tension (20) selon la revendication 1, dans lequel les moyens de séparation de quantité de commande sont configurés pour déterminer la quantité de commande cible sur la base de la valeur cible, de la tension de point d'interconnexion, de la puissance active au niveau du point d'interconnexion (Y) délivrée par l'aérogénératrice (2), et d'une équation prédéterminée.

3. Procédé de commande de tension pour un appareil de commande de tension (20) pour être utilisé dans un système de génératrice (100) qui comprend une aérogénératrice (2) comportant un dispositif de commutation pour commander une génératrice ; et un bloc de condensateurs (5) pour améliorer le facteur de puissance obtenu entre l'aérogénératrice (2) et un réseau électrique (1), le procédé de commande de tension étant **caractérisé en ce qu'**il comprend :
une étape de séparation qui sépare une quantité de commande cible pour la puissance réactive (Qn) pour faire en sorte que la tension de point d'interconnexion corresponde à la valeur cible, en une première quantité de commande (Q_devi) et une deuxième quantité de commande (Q_shift), lorsqu'il est déterminé qu'une tension de point d'interconnexion (Vr) au niveau d'un point d'interconnexion (Y) où l'aérogénératrice (2) est connectée au réseau électrique (1) s' écarte d'une valeur cible (Vr'), la première quantité de commande servant en tant que quantité de commande pour la puissance réactive qui est provoquée par une fluctuation de la puissance active au niveau du point d'interconnexion (Y), la deuxième quantité de commande servant en tant que quantité de commande pour la puissance réactive qui est provoquée par un changement d'une distribution de puissance dans le réseau électrique (1), ladite étape de séparation comprenant :

la déduction d'une première relation entre la puissance active (Pn) et la puissance réactive (Qn) sur la base de la tension de point d'interconnexion qui sert de valeur cible (Vr'), d'une tension de bus (Vs), et d'une impédance de réseau d'alimentation (x), ladite première relation définissant une première courbe obtenue à partir de :

$$Qn = \sqrt{\left(\frac{(VsVr')^2}{x^2} - Pn^2\right)} - \frac{Vr'^2}{x} \; ;$$

la déduction d'une deuxième relation entre la puissance active et la puissance réactive sur la base de la tension de point d'interconnexion (Vr) au niveau du point d'interconnexion (Y), de la tension de bus (Vs), et de l'impédance de réseau d'alimentation (x), ladite deuxième relation étant différente de la première relation lorsque la tension de point d'interconnexion (Vr) au niveau du point d'interconnexion (Y) s'écarte de la valeur cible (Vr') ; ladite deuxième relation définissant une deuxième courbe obtenue à partir de :

$$Qn = \sqrt{\left(\frac{(VsVr)^2}{x^2} - Pn^2\right)} - \frac{Vr^2}{x} \; ;$$

et la détermination de la première quantité de commande (Q_devi) et la deuxième quantité de commande (Q_shift) sur la base de la différence entre les première et deuxième relations, c'est à dire de la première quantité de commande (Q_devi) et de la deuxième quantité de commande (Q_shift) pour faire en sorte que la deuxième courbe corresponde à la première courbe ; ledit procédé comprenant en outre :

la commande du dispositif de commutation sur la base de la première quantité de commande ; et
la commande du bloc de condensateurs (5) sur la base de la deuxième quantité de commande.

# FIG. 1

# FIG. 2

# FIG. 3

# FIG. 4

INTERCONNECTION-POINT VOLTAGE Vr

INTERCONNECTION-POINT OUTPUT POWER Pn

INTERCONNECTION-POINT REACTIVE POWER Qn

21
CONTROL-AMOUNT SEPARATING SECTION

Q_devi

22
WIND-TURBINE CONTROL DEVICE

Q_shift

CAPACITOR-BANK CONTROL DEVICE

23

20

10 ; CENTRAL MONITORING SYSTEM

EP 2 858 199 B1

# FIG. 5

```
                    ┌──────────┐
                    │  START   │
                    └──────────┘
                         │
                         ▼
SA1 ──┌─────────────────────────────────────────┐◄──┐
      │           MONITOR GRID VOLTAGE           │   │
      └─────────────────────────────────────────┘   │
                         │                            │
                         ▼                            │
SA2 ──         ╱────────────────────╲        NO       │
              ╱   FLUCTUATION IN      ╲──────────────┘
              ╲   VOLTAGE OCCURS?     ╱
               ╲────────────────────╱
                         │
                        YES
                         ▼
      ┌─────────────────────────────────────────┐
      │           COMPARE P-Q CURVES,            │
      │  SEPARATE CONTROL AMOUNT INTO CONTROL    │
      │   AMOUNT CORRESPONDING TO SHIFT AND      │
      │ CONTROL AMOUNT CORRESPONDING TO DEVIATION,│◄──┐
SA3 ──│  SEND CONTROL AMOUNT CORRESPONDING TO    │   │
      │ SHIFT TO CAPACITOR-BANK CONTROL DEVICE,  │   │
      │  AND SEND CONTROL AMOUNT CORRESPONDING TO │   │
      │ DEVIATION TO WIND-TURBINE CONTROL DEVICE │   │
      └─────────────────────────────────────────┘   │
                         │                            │
                         ▼                            │
SA4 ──         ╱────────────────────╲        NO       │
              ╱   NO DEVIATION IN     ╲──────────────┘
              ╲   VOLTAGE OCCURS?     ╱
               ╲────────────────────╱
                         │
                        YES
                         ▼
                    ┌──────────┐
                    │   END    │
                    └──────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004320859 A
- JP 2004320860 A
- JP 4773936 B
- US 7245037 B
- US 7808126 B
- JP 2000078896 A
- WO 2011150932 A